# EUROPEAN PATENT SPECIFICATION

(11) **EP 1 464 476 B1**
(45) Date of publication and mention of the grant of the patent: **27.04.2011**
(21) Application number: 03701031.1
(22) Date of filing: 09.01.2003
(51) Int. Cl.: B32B 3/02, B29C 65/02

(54) **FUSION-BONDED PRODUCT FROM NON-POROUS MATERIAL AND POROUS MATERIAL**
SCHMELZVERBUNDENES PRODUKT AUS NICHTPORÖSEM MATERIAL UND PORÖSEM MATERIAL
PRODUIT ASSEMBLE PAR FUSION CONSTITUE DE MATERIAU POREUX ET NON POREUX

(30) Priority: 09.01.2002 JP 2002002851
(43) Date of publication of application: 06.10.2004
(73) Proprietor: Asahi Kasei Medical Co., Ltd., Tokyo 101-8101 (JP)
(72) Inventor: MATSUURA, Yoshimasa, Oita-shi, Oita 870-0303 (JP); TOMOURA, Seiichirou, Kawasaki-shi, Kanagawa 211-0041 (JP)
(74) Representative: von Kreisler Selting Werner
(86) International application number: PCT/JP2003/000106
(87) International publication number: WO 2003/059611

(56) References cited:
- EP-A- 0 726 461
- WO-A-00/62891
- WO-A-00/74509
- WO-A-99/64240
- WO-A1-02/04045
- FR-A- 2 115 263
- JP-A- 7 267 871
- JP-U- 60 154 117
- US-A- 2 772 997
- US-A- 5 269 860

## Description

### TECHNICAL FIELD

The present invention relates to a welded product of a laminate comprising a non-porous material and a porous material. In particular, the present invention relates to a welded product which must possess excellent resistance to delamination due to possession of a bonded part of a non-porous sheet material and a porous material that is substantially not adhesive, which is subjected to a force acting to delaminate the sheet material and the porous material at the bonded part under conditions of use.

### BACKGROUND ART

Conventionally, welding technologies such as highfrequency welding and heat sealing have been widely used for producing a welded product such as a float (inner tube), blood bag, and plastic bag of sheet materials such as soft polyvinyl chloride sheets or polyolefin films. Since a sufficient welding strength can be obtained in the welded product made from the same non-porous sheet materials, these welded products exhibit excellent resistance to delamination even if a pressure and a load are added to the joint part on the occasion of use. These technologies have been applied also to welded products of a non-porous material and a porous material. For example, Japanese Patent Application Laid-open No. 5-272045 discloses a furring material for a wall, Japanese Patent Application Laid-open No. 5-162258 discloses a water-barrier sheet, Japanese Patent Application Laid-open No. 7-265357 discloses a paper diaper, EP 0526678, Japanese Patent Application Laid-open No. 11-216179, Japanese Patent Application Laid-open No. 7-267871, and WO 95/17236 disclose blood processing filters.

Nearest prior art document JP-A-7267871 discloses a filter for leukopheresis loaded with blood filtration material having a fiber diameter of 10 µm or less in a flexible housing. The wording of said housing and filter material is carried out by heat tracing welding, high frequency welding or ultrasonic welding.

However, when the non-porous material and porous material are different materials, for example, when the non-porous material is a soft polyvinyl chloride sheet or a polyolefin film and the porous material is a nonwoven polyester fabric, the two materials have only a small affinity and exhibit substantially no adhesive force between them, the welded part of such a product is easily delaminated by small force. Thus, there has not necessarily been a welded product of a non-porous material and a porous material in respect of peel strength. In particular, there has been no welded product available for applications requiring pressure resistance and anti-load properties on the welded part.

### DISCLOSURE OF THE INVENTION

An object of the present invention is to provide a welded product exhibiting excellent resistance to peel made from a laminate containing a non-porous material and a porous material. A particular object of the present invention is to provide a welded product exhibiting excellent resistance to peel even when the affinity of a non-porous sheet material and a porous material is low and provides substantially almost no adhesive properties, for example, when the non-porous material is a soft polyvinyl chloride sheet and the porous material is a nonwoven polyester fabric.

The inventors of the present invention have conducted studies on the above problems and found that when a porous material and a non-porous material are welded, the peel strength increases if a composite material layer in which a part of the porous material is embedded in the non-porous material is formed in the interface of the non-porous material and the porous material. The inventors have filed a patent application based on this finding (PCT/JP01/05964; WO 02/04045). The present inventors have conducted further extensive studies and have found that when forming a layer resembling a composite material layer in which some part of the voids in a porous material is embedded by a non-porous sheet material, a structure in the range with the fixed length of the boundary line between the composite layer and the layer consisting only of the porous material adjacent to the composite layer is important and that if this structure is present, the welded product exhibits excellent resistance to peel even if there is almost no adhesive force between the sheet material and the porous material, for example, in a combination of a soft polyvinyl chloride sheet and a nonwoven polyester fabric as the porous material. Those findings led to completion of the present invention.

In particular, the present invention relates to the following :
1. A welded product prepared by welding a part of a laminate containing a non-porous material and a porous material, the laminate comprising the non-porous material as the outermost layer and the porous material an the inner side of the outermost layer so that the non-porous material sandwiches the porous material, wherein the cross-section of the welded portion comprises, from one end of the outermost layer to the other end of the outermost layer, at least five layers containing a layer (A) comprising the non-porous material alone, a composite material layer (B) containing the non-porous material and porous material in admixture, a layer (C) comprising the porous material alone, a composite material layer (D) containing the non-porous material and porous material in admixture, and a layer (E) comprising the non-porous material alone, characterized in that both the length L_{BC} of the boundary line between the composite material layer (B) and the porous material layer (C) and the length L_{DC} of the boundary line between the composite material layer (D) and the porous material layer (C) are in the range of 1.2 mm to 2.5 mm, wherein the boundary line is determined by dividing the cross-section of the welded part along the cross-sectional direction into sections each having a length of 0.4 mm and obtaining an image for the length L_{BC} of the boundary line between the layer (B) and Layer (C) and the length L_{DC} of the boundary line between the layer (D) and Layer (C) for each section and wherein the length L_{BC} and L_{DC} is defined as the maximum length of the boundary line of each section.
2. The welded product according to item 1., wherein the non-porous material and the porous material have a different dielectric loss.
3. The welded product according to item 1. or item 2. wherein the non-porous material has a larger dielectric loss than the porous material.
4. The welded product according to any one of items 1.-3., wherein the non-porous material has a lower melting point than the porous material.
5. The welded product according to any one of items 1.-4., wherein the non-porous material is formed from soft polyvinyl chloride.
6. The welded product according to any one of items 1.-5., wherein the porous material comprises a nonwoven fabric.
7. The welded product according to any one of items 6, wherein the nonwoven fabric comprises nonwoven polyester fabric.
8. The welded product according to any one of items 1.-7., wherein the porous material is a filter material for a blood processing filter.

### BRIEF DESCRIPTION OF THE DRAWINGS

Figure 1 is an electron microscope photograph showing the boundary of the composite material layer and the porous material layer of the present invention.
Figure 2 is the same photograph as that shown in Figure 1, except that the shading is intensified to illustrate the procedure for measuring the boundary line length.
Figure 3 is the same photograph as that shown in Figure 2, except that black dots in the white area of Figure 2 are whitened to illustrate the procedure for measuring the boundary line length.
Figure 4 is a drawing showing only the periphery of Figure 3 to illustrate the procedure for measuring the boundary line length.
Figure 5 is a drawing showing divided boundaries in the electron microscope photograph to illustrate the procedure for measuring the boundary line length.
Figure 6 is a view showing the shape of an electrode or horn used for forming a welded portion in the examples and comparative examples.

### BEST MODE FOR CARRYING OUT THE INVENTION

The present invention is described below in detail.

The welded product in the first embodiment of the present invention has a cross-section of the welded portion comprising at least three layers containing a layer (A) comprising the non-porous material alone, a composite material layer (B) containing the non-porous material and porous material in admixture, and a layer (C) comprising the porous material alone, wherein the length L_{BC} of the boundary line between the composite material layer (B) and the porous material layer (C) adjacent thereto is in the range of 1.2 mm to 2.5 mm.

The welded product in the second embodiment of the present invention has a cross-section of the welded portion comprising, from one end of the outermost layer to the other end of the outermost layer, at least five layers containing a layer (A) comprising the non-porous material alone, a composite material layer (B) containing the non-porous material and porous material in admixture, a layer (C) comprising the porous material alone, a composite material layer (D) containing the non-porous material and porous material in admixture, and a layer (E) comprising the non-porous material alone, wherein both the length L_{BC} of the boundary line between the composite material layer (B) and the porous material layer (C) adjacent thereto and the length L_{DC} of the boundary line between the composite material layer (D) and the porous material layer (C) adjacent thereto are in the range of 1.2 mm to 2.5 mm.

The cross-section of the welded portion herein refers to a cross-section viewed when the welded portion formed in a laminate is vertically cut. The present invention is described below referring to the second embodiment. First, a laminate comprising two sheets of a non-porous material, each having a size of 10 cm x 20 cm, and a porous material comprising three sheets of nonwoven fabric, all having the same size as the non-porous material sheets, with the latter porous material being sandwiched between the former two sheets, is provided. A straight welded portion with a width of approximately 2 mm is formed so as to divide the laminate into two 10 cm x 10 cm squares with the welded portion between them. Next, the laminate is cut parallel to the long side so that the cut line crosses the welded portion at a right angle. The cross-section of the welded portion that can be observed in this instance is the cross-section of the welded portion in question. This laminate is placed on an laboratory table. The components of the laminate are referred to for convenience, from the bottom to top, a non-porous sheet material 1, nonwoven fabric 1, nonwoven fabric 2, nonwoven fabric 3, and non-porous sheet material 2. Now, the cross-section has at least five layers, which are, from the bottom, a layer (A) comprising a part of the non-porous sheet material 1 alone, a composite material layer (B) containing the non-porous sheet material 1 and the nonwoven fabric 1 in admixture, a layer (C) comprising the porous material alone in which a part of the nonwoven fabric 1, the nonwoven fabric 2, and a part of the nonwoven fabrics 3 are fused and solidified, a composite material layer (D) containing the non-porous sheet material 2 and a part of the nonwoven fabric 3 in admixture, and a layer (E) comprising a part of the non-porous sheet material 2 alone.

In the present invention, the upper and lower sides of the laminate and cross-section are expediently indicated for ease of description or understanding and are neither a concept related to the direction of lamination during manufacturing of the welded product nor a concept related to the direction under operating conditions thereof. In addition, the configuration of the layers (B), (C), and (D) shown above is just an example. Other configurations such as a configuration in which the layer (B) is formed from the sheet-like material 1, the nonwoven fabric 1, and a part of the nonwoven fabric 2, and a configuration in which the layer (C) comprising a part of the nonwoven fabric 1 alone may also be used. The porous material forming the layer (C) is not necessarily entirely fused and solidified, but some fibers and non-fused material may remain in the layer in so far as delamination in the layer does not occur.

The length of the boundary line in the first embodiment of the present invention is determined by dividing the cross-section of the welded part along the cross-sectional direction into sections each having a length of 0.4 mm and obtaining an image for the length L_{BC} of the boundary line between the layer (B) and layer (C) for each section. The length L_{BC} is defined as the maximum length of the boundary line of each section. In the same manner, the lengths L_{BC} and L_{DC} are defined as the maximum lengths of the boundary lines in the second embodiment.

In all of the above-mentioned embodiments of the present invention, the length of the boundary line L_{BC} or L_{BC} and L_{DC} must be in the range of 1.2-2.5 mm. The length of the boundary line less than 1.2 mm or more than 2.5 mm is inadequate because the resistance to delamination between the sheet-like material having substantially no adhesiveness and the porous material is insufficient. The length of the boundary line is preferably from 1.4 mm to 2.3 mm, more preferably from 1.6 mm to 2.1 mm, and most preferably from 1.7 mm to 2.0 mm.

Now, the method for measuring the lengths of the boundary lines L_{BC} and L_{DC} in the laminate comprising a porous material which is a nonwoven polyester fiber fabric sandwiched between two sheets of soft polyvinyl chloride which is a non-porous material will be described in detail, taking the case in which a welded product of the second embodiment is obtained by high frequency welding.

The soft polyvinyl chloride has a high dielectric loss and is a material suitable for high frequency welding. On the other hand, polyester has a relatively lower dielectric loss than the soft polyvinyl chloride, generates heat with high frequency with more difficulty, and melts with more difficulty than the soft polyvinyl chloride due to the higher melting point. Moreover, since the soft polyvinyl chloride and polyester have almost no adhesiveness, it is difficult to achieve excellent peel resistance even if these are bonded.

However, it is possible to obtain the welded product of the present invention by selecting appropriate conditions. The materials are laminated, put into a metal mold for high frequency welding, and pressed at a prescribed pressure. Then, a high frequency wave is applied. The soft polyvinyl chloride heated by the high frequency wave becomes soft and melts, and invades the voids between the fibers in the nonwoven polyester fabric by the pressure from the metal mold. Here, it is important that the pressure and the pore size of the nonwoven fabric of the porous material be suitably selected so that the melted soft polyvinyl chloride can invade. In this instance, the nonwoven polyester fabric is not sufficiently heated to a temperature to cause the fibers to melt. In addition, since the fibers have a melting point higher than the soft polyvinyl chloride, the fibers are left as is without melting. The melted soft polyvinyl chloride invades the voids between fibers, resulting in a composite material layer, in which the fibers are embedded by the material of the container. On the other hand, the temperature of the nonwoven polyester fabric in the inner layer begins to increase from approximately the center in the thickness direction. As a result, the nonwoven fabric fiber near the center is heated by the high frequency waves to the melting point before the soft polyvinyl chloride invades from the vertical direction and melts until the melted material reaches the composite material layer. As a result, the layers (A) to (E) are ultimately formed through a cooling step after terminating application of the high frequency waves.

In the boundary of the layer (B) and layer (C) and the boundary of the layer (D) and layer (C), the invading soft polyvinyl chloride comes into contact with the layer (C) which has been melted and has solidified into the form of a plastic plate. In the embodiment of the present invention, non-melted fibers embedded in the soft polyvinyl chloride have originally been a part of the nonwoven fabrics which now have become the layer (C). If only the soft polyvinyl chloride can be removed from the layer (B), a structure studded with non-melted fibers from the surface of the layer (C) toward the layer (B) will be observed in the interface between the layer (B) and layer (C). Specifically, the vicinity of the boundary between the layer (B) and layer (C) resembles the structure that hairs (non-melted fibers) grows from a scalp (the layer (C)) and the spaces between the hairs is embedded with the soft polyvinyl chloride. The hairs intricately cross and are entangled. Therefore, even if there is no adhesiveness between the soft polyvinyl chloride and polyester, the layer (B) and layer (C) are not easily delaminated due to the physically intricate structure, resulting in a laminate with excellent peel resistance.

As described above, the welded product having the structure defined in the present invention and having the length of the boundary line in a preferable range can be obtained by appropriately selecting the pore size and the number of sheets of the nonwoven fabric porous material and adjusting the pressure to be pressed and the intensity of high frequency wave to be applied. When these conditions for forming the structure of the present invention are not appropriately selected, a layer consisting only of soft polyvinyl chloride may be formed in the clearances between two or more sheets of nonwoven fabrics. Also, a structure with only a small number of hairs per unit area or a structure with substantially no hairs may be produced. Thus, a preferable structure shown as the hair model above-described may not necessarily be produced.

Specifically, in order to obtain a length of the boundary layer in a preferable range, it is important to form the boundary between the layer (B) and the layer (C) and the boundary between the layer (D) and the layer (C) in the layer of one sheet of a porous material by providing a good balance between the invasion speed of the non-porous material and the melting speed of the porous material, determined by the melt viscosity and pressure of the non-porous material, the pore size of the porous material, and the like. In particular, when the porous material comprises a laminate made from two or more types of layers with different pore sizes, the invasion rate is higher in layers with a large pore size and slower in layers with a small pore size. If the pressure is not appropriate, a melted non-porous material may be accumulated between the layers. Therefore, there is an optimum pressure. Similarly, there is an optimal amount of heat provided to the material to be welded. Therefore, there are various welding conditions according to the types of non-porous material to be used and the combination of the structure and material for the porous material. It is important to select appropriate conditions by investigating the invasion speed of the non-porous material, the melting speed of the porous material, and the location at which the boundary line is formed by previous experiments. By doing so, the welded product of the present invention can be obtained.

In the above-described preferable structure, non-woven fibers projecting from the layer (C) or fibers partly embedded in the layer (C) are observed along the cross-section of the above welded portion. The boundary of the layer (B) and the layer (C) and the boundary of the layer (D) and the layer (C) present an intricate appearance like a sawtooth coastline. The length of the boundary line L_{BC} (L_{DC}) in the present invention can be determined by measuring the length of the sawtooth coastline.

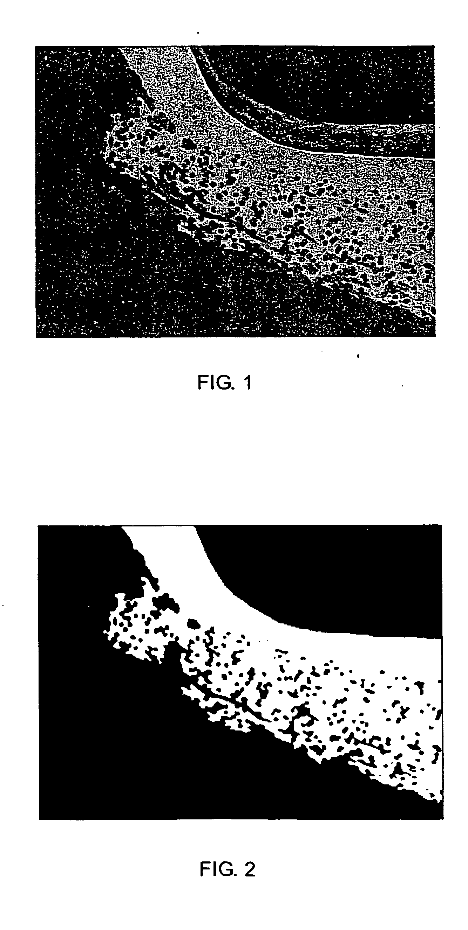

The cross section of the welded portion is cut out by the method mentioned above and irregularities along the cross-section are removed using the edge of a razor or the like to obtain a flat and smooth surface. After grinding the cross-section using sandpaper or an abrasive agent such as a diamond paste to make the cross-section more flat and smooth, a secondary reflection electronic image is inspected using a scanning electron microscope and a photograph is taken. One example is shown in Figure 1. Since the polyvinyl chloride and polyester are reflected respectively white and black, the boundary of the layer (B) and layer (C) can be relatively easily observed in this Figure. If the combination of materials changes, the contrast may differ, making it difficult to identify the boundary. In such an instance, the boundary is determined by an inspection method appropriate to the material, such as a method of using scanning electron microscopy together with energy dispersive X-ray analysis (EDX analysis), a method of using an optical microscope, or a method of using a laser microscope

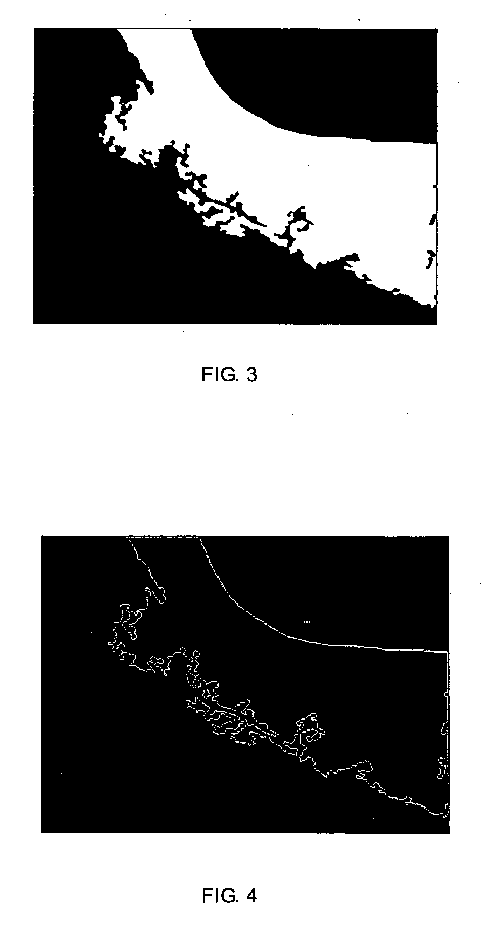

The procedure for measuring of the coastline length will now be explained referring to Figures 2 to 5 using the above sawtooth coastline as an example, wherein the black polyester areas in the above sawtooth coastline are referred to as the sea and the white soft polyvinyl chloride areas are referred to as the land. Figure 2 is the same photograph as that shown in Figure 1, except that the shade is intensified by binarization processing to distinctly indicate the boundary. In Figure 2, the non-melted fibers surrounded by the soft polyvinyl chloride in the layers (B) and (D) are seen like black ponds or lakes scattered in the land. These black spots are firstly smeared into white. Figure 3 is an example showing black spots smeared into white. Similarly, there are isolated white spots of soft polyvinyl chloride surrounded by melted polyester like islands floating on the sea. These white spots are smeared into black. In this manner, the lakes and islands are eliminated from the photograph, leaving only coastlines connected with the land. Figure 4 is an example in which only the coastlines are left.

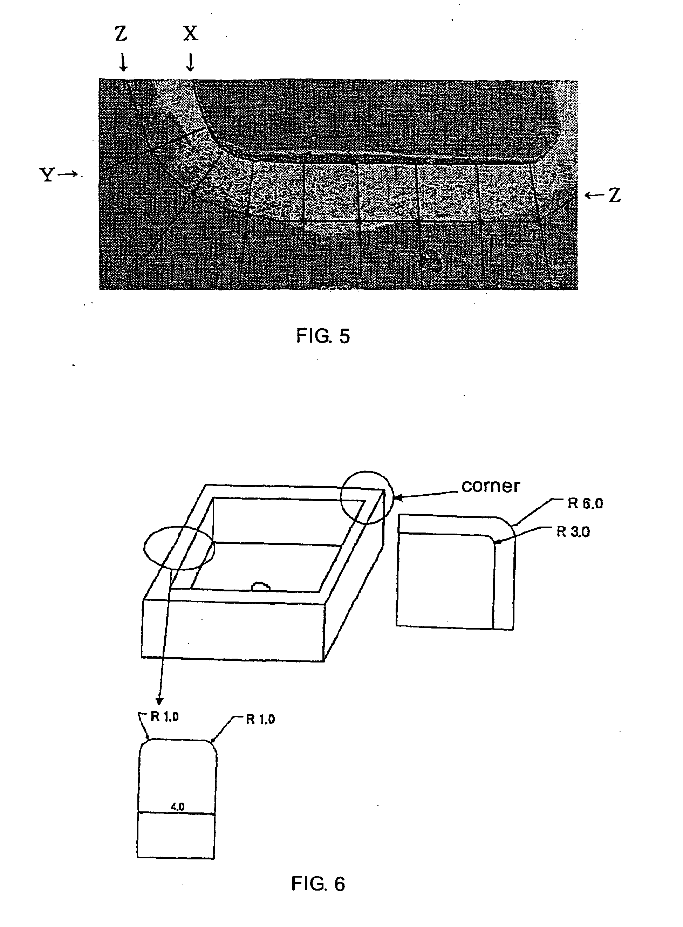

Next, the length of the coastline is measured using a curvimeter, a image processing unit, and the like. Since the total extension of the coastline will increase in accordance with the width dependency of the welded portion, it is necessary to normalize the welded part by dividing the welded portion at a fixed interval to express the complexity of the coastline. The procedure for normalization is explained referring to Figure 5. In the present invention, a line is drawn by connecting the terminals (outermost-layer terminals) of the layer (A) on the opposite side of the layer (C). This line is referred to as the terminal line X. A line starting from the terminal line and crossing the terminal line X at a right angle is drawn toward the layer (C). This line is referred to as a right-angled line Y. Next, a line connecting the points crossing the right-angled line at a distance equivalent to the thickness of the sheet-like material toward the layer (C) side from the terminal line is drawn. This line is referred to as a base line Z. Here, the thickness of the sheet-like material indicates the thickness of the non-welded portion of the sheet-like material. The base line Z is divided at intervals of 0.4 mm. A partition number is given to each section. Each section is defined as a zone parted by two right-angled lines Y and one terminal line X, with the layer (C) side opened. The layer (C) side is left open because the coastline may come to the terminal line side beyond the base line or may not reach the base line. After defining the sections according to the above procedure, the total extension of the coastline of each section is measured. The maximum value is regarded as L_{BC}. Sections on the layer E side are defined in the same manner and the total extension of the coastline of each section is measured. The maximum value is regarded as L_{DC}.

When L_{BC} and L_{DC} are less than 1.2 mm, the number of hairs described in the hair model above is too small to provide adequate peel resistance. On the other hand, when L_{BC} and L_{DC} are more than 2.5 mm, the layer (C) is formed only insufficiently, that is, melting is insufficient for the porous material to become solid plate-like, resulting in delamination of the layer (C) in the porous material.

The width of the welded portion formed by pressing with an electrode or horn in the welded product of the present invention is preferably 1-10 mm, more preferably 2-8 mm, and still more preferably 3-7 mm. If the width is less than 1 mm, the sheet-like material may rupture near the welded portion when a delaminating force is exerted. A width exceeding 10 mm is uneconomical because it takes a long period of time for welding.

The welding portion may easily rupture, even in the above-mentioned width of the welded portion, when a delamination stress acts on the neighborhood of the boundary (the edge) between the welded portion and the non-welded portion. The delamination resistance is weak particularly when the edge has an acute angle. Therefore, the edge should have a certain degree of roundness, for example, with a curvature radius of preferably 0.25-2.0 mm, and more preferably 0.5-1.5 mm, and still more preferably 0.75-1.25 mm.

As examples of the non-porous sheet material suitably used in the present invention, sheet-like or film-like formed products made from a thermoplastic elastomer such as soft polyvinyl chloride, polyvinylidene chloride, nylon, polyurethane, ethylene vinyl-acetate copolymer, hydrogenated styrene-butadiene-styrene copolymer, styreneisoprene-styrene copolymer or the hydrogenated product thereof, or a mixture of the thermoplastic elastomer and a softening agent such as polyolefin and ethylene-ethyl acrylate can be given. Among these, soft polyvinyl chloride, polyvinylidene chloride, nylon, and polyurethane are preferable materials, with the soft polyvinyl chloride being most preferable.

Porous materials known in the art such as a fibrous porous medium such as a non-woven fabric and a porous medium having continuous pores of a three-dimensional network may be used in the present invention. Although the porous material has a small apparent specific gravity due to inclusion of continuous pores and closed cells therein, the specific gravity increases to that inherently possessed by the material when fused and solidified, because these continuous pores and closed cell substantially disappear after fusion and solidification. If the porosity of the porous material is 75%, the thickness of the material after welding must be reduced to 25% or less of the thickness before welding. Otherwise, voids may remain inside the porous material or a clearance may be produced between the non-porous sheet material and the porous material, resulting in insufficient bonding strength. Examples of the nonwoven fabric material include polyolefins such as polypropylene and polyethylene, styrene-isobutylene-styrene copolymer, polyurethane, and polyester. Of these, polyurethane, polyester, and polyolefin are preferable, with polyester being particularly preferable.

Either a single porous material or a combination of two or more porous materials may be used as the porous material. When a combination of two or more porous materials is used, the materials used preferably can adhere to each other so as to prevent delamination in the porous materials. Either porous materials with the same fiber diameter and pore size or a combination of porous materials with different fiber diameters and pore sizes may be used. The porous material coming into contact with a non-porous sheet material preferably has a fiber diameter and pore size large enough to allow the melted non-porous sheet material to penetrate. Therefore, when two or more porous materials with different fiber diameters and pore sizes are laminated, it is preferable that the porous materials be arranged in the order in which the porous materials gradually or continuously decrease in fiber diameter and pore size starting with the porous material closest to the non-porous sheet material.

The product of the present invention can be used as a welded product of a porous material and a non-porous material, such as a disposable paper diaper comprising a laminate of porous materials containing a water-adsorptive flexible elastic nonwoven fabric and a waterproofing non-porous material in combination, and a water-barrier sheet or a furring material for walls in which a water-leak preventive porous material and a waterproofing non-porous material are combined. The present invention is suitable for a welded product of a polyvinyl chloride sheet and a nonwoven polyester fabric. In particular, the product of the present invention is ideal as a blood-processing filter comprising a combination of an outer housing made from a soft polyvinyl chloride sheet and a filter material of a nonwoven polyester fabric.

As a method for obtaining the welded product of the present invention by welding a laminate, methods such as internal heating using high frequency welding or ultrasonic welding and external heating by heat sealing can be used. When the melting points of the non-porous sheet material and the porous material are comparatively low, for example, when using a polyethylene sheet for the non-porous sheet material and a nonwoven polypropylene fabric for the porous material, the materials can be melted by heat conduction from the outside. Therefore, an external heating method such as heat sealing can be employed. When the non-porous sheet material is a material exhibiting a comparatively high dielectric loss, high frequency welding is preferable. The high frequency welding can be applied to a combination of a non-porous sheet material with a large dielectric loss and a porous material having a small dielectric loss as compared with the sheet material, such as a combination of a polyvinyl chloride sheet and a nonwoven polyester fabric. In addition, a combination of a non-porous sheet material and a porous material both having a large dielectric loss, such as a combination of a polyvinyl chloride sheet and polyurethane, abundantly generates heat by a high frequency and, therefore, can be suitably welded using high frequency welding.

A long period of time is necessary for heating a porous material to the melting point when ultrasonic welding is used, because it is difficult to transform ultrasonic wave vibration energy, which is easily dissipated in the porous material, into heat energy. For this reason, if the ultrasonic wave vibration energy is applied after compressing the porous material until the porosity decreases to 50% or less, and preferably 30% or less, the ultrasonic wave vibration energy can be efficiently transformed into heat energy making it possible to weld the materials in a short period of time.

The width of the electrode or horn used for forming the welded portion of the welded product of the present invention is preferably 1-10 mm, more preferably 2-8 mm, and still more preferably 3-7 mm. If the width is less than 1 mm, the sheet-like material may rupture near the welded portion when a delaminating force is exerted. A width exceeding 10 mm is uneconomical because a long period of time is required for welding.

In addition, when a delaminating force is exerted similarly, the sheet-like material has a reduced thickness near the welded portion and this portion may rupture. Therefore, the electrode or horn used for forming the welded portion has a round edge in the welded portion from the end in the width direction through the non-welding portion with a curvature radius preferably in the range of 0.25-2.0 mm, more preferably 0.5-1.5 mm, and still more preferably 0.75-1.25 mm.

### EXAMPLES

The welded product of a non-porous material and a porous material of the present invention will now be described in detail by way of examples, which should not be construed as limiting the present invention.

### (Measurement method)

### (1) Preparation of test specimen

The sample was made a cut in three points across the welded part. The interval of the cuts was about 25 mm, each cut having a length of about 40 mm on both sides of the bonded portion. Test specimens were prepared by cutting the sample parallel to the bonded portion at points about 30 mm from both sides of the bonded portion. Irregularities along the cut surface of the bonded parts were removed using a razor to acquire a flat and smooth cut plane surface. One of the test specimens was used as a sample for the delaminating test. The length of the bonded portion was measured using a caliper at three points. The average was taken as the length of the bonded portion. The remaining other test specimen was used as a sample for measuring the length of the boundary line.

### (2) Method for measuring boundary line length

A photograph of the sample for measuring the length of the boundary line prepared in (1) above was taken using a scanning electron microscope by the method of inspecting the secondary reflection electronic image along the cross section of the welded portion that had been in contact with the sample for the peel test. The length of the boundary line was determined according to the above-described method using image processing.

### (3) Peel test procedure

The sheet material attached to the sample for the delaminating test with a width of about 25 mm prepared by the method (1) was secured using a gripper at a point 10 mm apart from the bonded portion to draw the sample at a speed of 10 mm/min using a tensile tester, whereby a force acting to separate the bonded portion was applied to measure the tensile strength at break of the test specimen (23°C). The value obtained by dividing the measured tensile strength by the length of the bonded portion was taken as the delaminating-breaking strength.

### Example 1

A laminate was prepared using a soft polyvinyl chloride resin sheet as the non-porous material and nonwoven polyester fabrics as the porous material. The nonwoven polyester fabrics were laminated in the following manner. A total of 42 sheets consisting of non-woven fabric (1) with an average fiber diameter of 12 µm and weight of per unit area (Metsuke) of 30 g/m² (four sheets), non-woven fabric (2) with an average fiber diameter of 1.7 µm and weight per unit area of 66 g/m² (one sheet), non-woven fabric (3) with an average fiber diameter of 1.2 µm and weight per unit area of 40 g/m² (32 sheets), non-woven fabric (2) (one sheet), and non-woven fabric (1) (four sheets) were laminated. The laminated nonwoven fabric was sandwiched using soft polyvinyl chloride sheets on both sides and welded using a rectangular brass die (electrode) having a welding portion with a straight line portion of 2 mm and a round portion on both sides with a curvature radius of 1.0 mm, specifically, the electrode has a welded portion width of 4 mm, a short side length of 57 mm, a long side length of 74 mm, and internal and external curvature radii respectively of 3 mm and 6 mm at the four corners, as shown in Figure 6. Welding was carried out under the conditions of 19.9 MPa of pressure applied to the die contact portion and a positive electrode current of 0.5 A for 4.0 seconds to obtain a welded portion with a cross-sectional thickness of 1.4 mm. The boundary line length and delaminating breaking strength of the welded product prepared in this manner were measured. The results are shown in Table 1. In Table 1, either the length L_{BC} or L_{DC} actually delaminated in the delaminating test was indicated as the boundary line length on the delaminated side.

### Example 2

A welded product was prepared in the same manner as in Example 1, except for using 32 sheets of the nonwoven fabric (1), i.e. nonwoven polyester fabric with an average fiber diameter of 12 µm and weight per unit area (Metsuke) of 30 g/m². The same test as in Example 1 was carried out. The results are shown in Table 1. In Table 1, either the length L_{BC} or L_{DC} actually delaminated in the delaminating test was indicated as the boundary line length on the delaminated side.

### Example 3

A welded product was prepared in the same manner as in Example 1, except for extending the welding time for 2 seconds and increasing the positive electrode current by 0.2 A. The same test as in Example 1 was carried out. The results are shown in Table 1. In Table 1, either the length L_{BC} or L_{DC} actually delaminated in the delaminating test was indicated as the boundary line length on the delaminated side.

### Example 4

A welded product was prepared in the same manner as in Example 1, except for using a total of 35 sheets as the porous material (nonwoven polyester fabric) consisting of non-woven fabric (1) with an average fiber diameter of 12 µm and weight per unit area of 30 g/m² (four sheets), non-woven fabric (2) with an average fiber diameter of 1.7 µm and weight per unit area of 66 g/m² (one sheet), non-woven fabric (3) with an average fiber diameter of 1.2 µm and weight per unit area of 40 g/m² (25 sheets), non-woven fabric (2) (one sheet), and non-woven fabric (1) (four sheets) and adopting a welding time of 3.5 seconds and a positive electrode current of 0.5 A. The same test as in Example 1 was carried out. The results are shown in Table 1. In Table 1, either the length L_{BC} or L_{DC} actually delaminated in the delaminating test was indicated as the boundary line length on the delaminated side.

### Example 5

A laminate was prepared using a soft polyvinyl chloride resin sheet as the non-porous material, and nonwoven polyester fabrics and nonwoven polypropylene fabrics as the porous material. The nonwoven polyester fabrics and the nonwoven polypropylene fabrics were laminated in the following manner. A welded product was prepared in the same manner as in Example 1, except for using a total of 22 sheets consisting of non-woven fabric (1): non-woven polyester fabric with an average fiber diameter of 12 µm and weight per unit area of 30 g/m² (six sheets), non-woven fabric (2): non-woven polypropylene fabric with an average fiber diameter of 0.9 µm and weight per unit area of 27 g/m² (ten sheets), and non-woven fabric (1) (six sheets) and adopting a welding time of 2.0 seconds and a positive electrode current of 0.4 A to produce welded portion with a cross-sectional thickness of 1.2 mm. The same test as in Example 1 was carried out. The results are shown in Table 1. In Table 1, either the length L_{BC} or L_{DC} actually delaminated in the delaminating test was indicated as the boundary line length on the delaminated side.

### Example 6

A laminate was prepared using a soft polyvinyl chloride resin sheet as the non-porous material, and nonwoven polyester fabrics and nonwoven nylon fabrics as the porous material. The nonwoven polyester fabrics and the nonwoven nylon fabrics were laminated in the following manner. A welded product was prepared in the same manner as in Example 1, except for using a total of 27 sheets consisting of non-woven fabric (1): non-woven polyester fabric with an average fiber diameter of 12 µm and weight per unit area of 30 g/m² (six sheets), non-woven fabric (2): non-woven nylon fabric with an average fiber diameter of 1.0 µm and weight per unit area of 33 g/m² (15 sheets), and non-woven fabric (1) (six sheets) and adopting a positive electrode current of 0.3 A and a welding time of 3.0 seconds to produce a welded portion with a cross-sectional thickness of 1.2 mm. The same test as in Example 1 was carried out. The results are shown in Table 1. In Table 1, either the length L_{BC} or L_{DC} actually delaminated in the delaminating test was indicated as the boundary line length on the delaminated side.

### Example 7

A laminate was prepared using a soft polyvinyl chloride resin sheet as the non-porous material and nonwoven nylon fabrics as the porous material. The nonwoven nylon fabrics were laminated in the following manner. A welded product was prepared in the same manner as in Example 1, except for using a total of 27 sheets consisting of non-woven fabric (1) with an average fiber diameter of 12 µm and weight per unit area of 27 g/m² (six sheets), non-woven fabric (2) with an average fiber diameter of 1.0 µm and weight per unit area of 33 g/m² (15 sheets), and non-woven fabric (1) (six sheets) and adopting a positive electrode current of 0.2 A and a welding time of 3.0 seconds to produce welded portion with a cross-sectional thickness of 1.2 mm. The same test as in Example 1 was carried out. The results are shown in Table 1. In Table 1, either the length L_{BC} or L_{DC} actually delaminated in the delaminating test was indicated as the boundary line length on the delaminated side.

### Example 8

A welded product was produced in the same manner as in Example 1, except that a total of 34 sheets of non-woven fabrics as the porous material consisting of non-woven fabric (1) with an average fiber diameter of 12 µm and weight per unit area of 30 g/m² (four sheets), non-woven fabric (2) with an average fiber diameter of 1.7 µm and weight per unit area of 66 g/m² (two sheets), non-woven fabric (3) with an average fiber diameter of 1.2 µm and weight per unit area of 40 g/m² (22 sheets), non-woven fabric (2) (two sheets), and non-woven fabric (1) (four sheets) were laminated, and the laminated nonwoven fabric was sandwiched using soft polyvinyl chloride sheets on both sides and welded at a positive electrode current of 0.6 A and a welding time of 6.0 seconds using a rectangular brass die (electrode) having a welding portion with a straight line portion of 3 mm and a round portion on both sides with a curvature radius of 1.0 mm, specifically, a welded portion width of 5 mm, a short side length of 89 mm, a long side length of 119 mm, and internal and external curvature radii respectively of 3 mm and 8 mm at the four corners. The same test as in Example 1 was carried out. The results are shown in Table 1. In Table 1, either the length L_{BC} or L_{DC} actually delaminated in the delaminating test was indicated as the boundary line length on the delaminated side.

### Example 9

As the porous material, a total of 30 sheets of nonwoven polyester fabrics consisting of non-woven fabric (1) with an average fiber diameter of 12 µm and weight per unit area of 30 g/m² (four sheets), non-woven fabric (2) with an average fiber diameter of 1.7 µm and weight per unit area of 66 g/m² (one sheet), and non-woven fabric (3) with an average fiber diameter of 1.2 µm and weight per unit area of 40 g/m² (25 sheets) were laminated. A soft polyvinyl chloride sheet was placed only on upper side of the laminated nonwoven fabric. A welded product was welded in the same manner as in Example 1, except that a positive electrode current of 0.4 A was applied for 4.0 seconds to produce a welded portion with a cross-sectional thickness of 1.4 mm. The same test as in Example 1 was carried out. The results are shown in Table 1. The boundary line length on the delamination side is shown as L_{BC} in Table 1.

### Example 10

A laminate was prepared using a soft polyvinyl chloride resin sheet as the non-porous material and nonwoven polyester fabrics as the porous material. The nonwoven polyester fabrics were laminated in the following manner. As the porous material, a total of 37 sheets consisting of non-woven fabric (1) with an average fiber diameter of 12 µm and weight per unit area of 30 g/m² (four sheets), non-woven fabric (2) with an average fiber diameter of 1.7 µm and weight per unit area of 66 g/m² (one sheet), and non-woven fabric (3) with an average fiber diameter of 1.2 µm and weight per unit area of 40 g/m² (32 sheets) were laminated. A soft polyvinyl chloride sheet was placed only below the laminated nonwoven fabric. The laminate was welded using a ultrasonic welding machine at a frequency of 40 kHz using a horn with a radius of 40 mm processed by creping in the form of a 0.5 mm quadrangular pyramid on the surface of the welded portion, wherein the welded portion has a width of 9 mm (a straight line portion width of 5 mm and a round portion curvature radius of 2.0 mm), and using a silicon rubber of 150 mm x 150 mm as an anvil. After adjusting the pressure to make the repulsive force of the welded product 800N and the amplitude at the tip of the horn 60 µm, the laminate was welded at a welding time of 3.0 seconds to obtain a welded portion with a cross-sectional thickness of 1.0 mm. The boundary line length and delaminating breaking strength of the welded product prepared in this manner were measured. The results are shown in Table 1. The boundary line length on the delamination side is shown as L_{BC} in Table 1.

**Table 1**

| | Boundary line length (mm) | Delaminating breaking strength (N/mm) |
|---|---|---|
| Example 1 | 1.48 | 2.38 |
| Example 2 | 1.71 | 2.89 |
| Example 3 | 1.98 | 3.46 |
| Example 4 | 1.21 | 2.52 |
| Example 5 | 1.27 | 3.19 |
| Example 6 | 1.86 | 3.09 |
| Example 7 | 2.34 | 2.28 |
| Example 8 | 1.26 | 2.44 |
| Example 9 | 1.54 | 2.92 |
| Example 10 | 1.54 | 2.45 |

### Comparative Example 1

A welded product was prepared in the same manner as in Example 1, except for using 32 sheets of the nonwoven fabric (3) with an average fiber diameter of 1.2 µm and weight per unit area of 40 g/m² as the porous material. The same test as in Example 1 was carried out. The results are shown in Table 2. In Table 2, either the boundary line length L_{BC} or L_{DC} actually delaminated in the delaminating test was indicated.

### Comparative Example 2

A welded product was prepared in the same manner as in Example 1, except for decreasing the welding time for 2 seconds. The same test as in Example 1 was carried out. The results are shown in Table 2. In Table 2, either the boundary line length L_{BC} or L_{DC} actually delaminated in the delaminating test was indicated.

### Comparative Example 3

A test specimen was prepared from a commercially available blood filter comprising a nonwoven fabric prepared by laminating a total of 27 sheets consisting of nonwoven polyester fabric (1) with an average fiber diameter of 12 µm and weight per unit area of 30 g/m² (four sheets), nonwoven polypropylene fabric (2) with an average fiber diameter of 1.5 µm and weight per unit area of 41 g/m² (22 sheets), and the non-woven fabric (1) (one sheet) and soft polyvinyl chloride sheets sandwiching the laminate of nonwoven fabric on both sides. In this instance, since the amount of the soft polyvinyl chloride sheet of the non-porous material is not enough to be secured with a grasping jig, the test specimen was prepared by causing the same material to adhere to the non-porous material so as not to contact with the welded part. The boundary line length and delaminating breaking strength were measured in the same manner as described above. The results are shown in Table 2.

**Table 2**

| | Boundary line length (mm) | Delaminating breaking strength (N/mm) |
|---|---|---|
| Comparative Example 1 | 0.71 | 0.73 |
| Comparative Example 2 | 2.72 | 1.23 |
| Comparative Example 3 | 1.10 | 0.77 |

### INDUSTRIAL APPLICABILITY

As described above, a welded product with high peel resistance can be obtained by suitably selecting the boundary line length of the welded product produced by welding a part of a laminate containing a non-porous material and a porous material.

## Claims

1. A welded product prepared by welding a part of a laminate containing a non-porous material and a porous material, the laminate comprising the non-porous material as the outermost layer and the porous material on the inner side of the outermost layer so that the non-porous material sandwiches the porous material, wherein the cross-section of the welded portion comprises, from one end of the outermost layer to the other end of the outermost layer, at least five layers containing a layer (A) comprising the non-porous material alone, a composite material layer (B) containing the non-porous material and porous material in admixture, a layer (C) comprising the porous material alone, a composite material layer (D) containing the non-porous material and porous material in admixture, and a layer (E) comprising the non-porous material alone,
**characterized in that** both the length L_{BC} of the boundary line between the composite material layer (B) and the porous material layer (C) and the length L_{DC} of the boundary line between the composite material layer (D) and the porous material layer (C) are in the range of 1.2 mm to 2.5 mm, wherein the boundary line is determined by dividing the cross-section of the welded part along the cross-sectional direction into sections each having a length of 0.4 mm and obtaining an image for the length L_{BC} of the boundary line between the layer (B) and Layer (C) and the length L_{DC} of the boundary line between the layer (D) and Layer (C) for each section and wherein the length L_{BC} and L_{DC} is defined as the maximum length of the boundary line of each section.

2. The welded product according to claim 1, wherein the non-porous material and the porous material have a different dielectric loss.

3. The welded product according to claim 1 or claim 2 wherein the non-porous material has a larger dielectric loss than the porous material.

4. The welded product according to any one of claims 1-3, wherein the non-porous material has a lower melting point than the porous material.

5. The welded product according to any one of claims 1-4, wherein the non-porous material is formed from soft polyvinyl chloride.

6. The welded product according to any one of claims 1-5, wherein the porous material comprises a nonwoven fabric.

7. The welded product according to claim 6, wherein the nonwoven fabric comprises nonwoven polyester fabric.

8. The welded product according to any one of claims 1-7, wherein the porous material is a filter material for a blood processing filter.

## Patentansprüche

1. Geschweißtes Produkt, hergestellt durch Schweißen eines Teils eines Laminats, das ein nichtporöses Material und ein poröses Material enthält, wobei das Laminat das nichtporöse Material als äußerste Schicht und das poröse Material auf der Innenseite der äußersten Schicht umfasst, so dass das nichtporöse Material das poröse Material sandwichartig einschließt, wobei der Querschnitt des geschweißten Teils von einem Ende der äußersten Schicht zum anderen Ende der äußersten Schicht wenigstens fünf Schichten umfasst, die eine Schicht (A), welche nur das nichtporöse Material umfasst, eine Verbundstoffschicht (B), die das nichtporöse Material und das poröse Material im Gemisch enthält, eine Schicht (C), die nur das poröse Material umfasst, eine Verbundstoffschicht (D), die das nichtporöse Material und das poröse Material im Gemisch enthält, und eine Schicht (E), die nur das nichtporöse Material umfasst, enthalten,
**dadurch gekennzeichnet, dass** sowohl die Länge L_{BC} der Grenzlinie zwischen der Verbundstoffschicht (B) und der Schicht (C) aus dem porösen Material als auch die Länge L_{DC} der Grenzlinie zwischen der Verbundstoffschicht (D) und der Schicht (C) aus dem porösen Material im Bereich von 1,2 mm bis 2,5 mm liegt, wobei die Grenzlinie **dadurch** bestimmt wird, dass man den Querschnitt des geschweißten Teils entlang der Querschnittsrichtung in Abschnitte mit einer Länge von 0,4 mm unterteilt und für jeden Abschnitt ein Bild für die Länge L_{BC} der Grenzlinie zwischen der Schicht (B) und der Schicht (C) und die Länge L_{DC} der Grenzlinie zwischen der Schicht (D) und der Schicht (C) erhält, wobei die Länge L_{BC} und L_{DC} als maximale Länge der Grenzlinie jedes Abschnitts definiert ist.

2. Geschweißtes Produkt gemäß Anspruch 1, wobei das nichtporöse Material und das poröse Material einen unterschiedlichen dielektrischen Verlustfaktor aufweisen.

3. Geschweißtes Produkt gemäß Anspruch 1 oder 2, wobei das nichtporöse Material einen größeren dielektrischen Verlustfaktor aufweist als das poröse Material.

4. Geschweißtes Produkt gemäß einem der Ansprüche 1 bis 3, wobei das nichtporöse Material einen niedrigeren Schmelzpunkt aufweist als das poröse Material.

5. Geschweißtes Produkt gemäß einem der Ansprüche 1 bis 4, wobei das nichtporöse Material aus weichem Polyvinylchlorid besteht.

6. Geschweißtes Produkt gemäß einem der Ansprüche 1 bis 5, wobei das poröse Material einen Vliesstoff umfasst.

7. Geschweißtes Produkt gemäß Anspruch 6, wobei der Vliesstoff einen Polyester-Vliesstoff umfasst.

8. Geschweißtes Produkt gemäß einem der Ansprüche 1 bis 7, wobei das poröse Material ein Filtermaterial für einen Blutverarbeitungsfilter ist.

## Revendications

1. Produit soudé préparé par soudage d'une partie d'un stratifié contenant un matériau non poreux et un matériau poreux, le stratifié comprenant le matériau non poreux en tant que couche extérieure et le matériau poreux au côté intérieur de la couche extérieure de manière que le matériau non poreux prenne le matériau poreux en sandwich, dans lequel la section transversale de la partie soudée comprend, d'une extrémité de la couche extérieure à l'autre extrémité de la couche extérieure, au moins cinq couches contenant une couche (A) comprenant seulement le matériau non poreux, une couche de matériau composite (B) contenant le matériau non poreux et le matériau poreux en mélange, une couche (C) comprenant seulement le matériau poreux, une couche de matériau composite (D) contenant le matériau non poreux et le matériau poreux en mélange, et une couche (E) comprenant seulement le matériau non poreux,
**caractérisé en ce qu'**aussi bien la longueur L_{BC} de la ligne de division entre la couche de matériau composite (B) et la couche de matériau poreux (C) que la longueur L_{DC} de la ligne de division entre la couche de matériau composite (D) et la couche de matériau poreux (C) sont comprises entre 1,2 mm et 2,5 mm, dans lequel la ligne de division est déterminée par division de la section transversale de la partie soudée dans le sens transversal en sections ayant chacune une longueur de 0,4 mm, et obtention d'une image pour la longueur L_{BC} de la ligne de division entre la couche (B) et la couche (C) et la longueur L_{DC} de la ligne de division entre la couche (D) et la couche (C) pour chaque section, dans lequel la longueur L_{BD} et L_{DC} est définie comme la longueur maximale de la ligne de division de chaque section.

2. Produit soudé selon la revendication 1, dans lequel le matériau non poreux et le matériau poreux one une perte diélectrique différente.

3. Produit soudé selon la revendication 1 ou 2, dans lequel le matériau non poreux a une perte diélectrique supérieure à celle du matériau poreux.

4. Produit soudé selon l'une quelconque des revendications 1 à 3, dans lequel le matériau non poreux a un point de fusion inférieure à celui du matériau poreux.

5. Produit soudé selon l'une quelconque des revendications 1 à 4, dans lequel le matériau non poreux est formé de chlorure de polyvinyle souple.

6. Produit soudé selon l'une quelconque des revendications 1 à 5, dans lequel le matériau poreux comprend un tissu non tissé.

7. Produit soudé selon la revendication 6, dans lequel le tissu non tissé comprend un tissu non tissé de polyester.

8. Produit soudé selon l'une quelconque des revendications 1 à 7, dans lequel le matériau poreux est un matériau filtrant pour un filtre de traitement du sang.
